# EUROPEAN PATENT APPLICATION

(11) **EP 2 105 934 A2**
(43) Date of publication of application: **30.09.2009**
(21) Application number: 09002605.5
(22) Date of filing: 25.02.2009
(51) Int. Cl.: G21C 3/04, G21C 3/17

(54) **Fuel rod and assembly containing an internal hydrogen/tritium getter structure**

(30) Priority: 24.03.2008 US 53771
(71) Applicant: Westinghouse Electric Company LLC, Monroeville, PA 15146-2866 (US)
(72) Inventor: Liu, Jin, Elgin, South Carolina 29045 (US); Knott, Ronald, Columbia, South Carolina 29212 (US); Kesterson, Ronald, Columbia, South Carolina 29212 (US); Fiero, Ivan, Columbia, South Carolina 29229 (US); Mitchell, David, Columbia, South Carolina 29229 (US); Stucker, David, Columbia, South Carolina 29063 (US); Sung, Yixing, Monroeville, Pennsylvania 15146 (US); Fetterman, Robert, Murrysville, Pennsylvania 15668 (US); Hallstadius, Lars, 72592 Vasteras (SE)
(74) Representative: Gallo, Wolfgang

(57) **Abstract**

A fuel assembly (16) for a nuclear reactor contains fuel rods (48) which contain nuclear fuel pellets (62) held in place by a spring means or a like device (64) and end plugs (56,58) where a hollow gas absorber structure (80) is also disposed within the fuel rods (48) where at least one surface of the absorber structure (80) is coated with a catalyst material (83) that absorbs and retains at least one of hydrogen and tritium.

## Description

### FIELD OF THE INVENTION

This invention relates to fuel rod assemblies and fuel rods within such assemblies, where fuel rods contain an internal hydrogen/tritium "getter" structure located within the fuel rod, for example near the bottom. The "getter" or "absorber" structure is effective to absorb and retain any hydrogen (H) or tritium (gaseous hydrogen isotope having an atomic weight of 3, H³ or H3 - emits beta rays) and retain such inside the fuel rod, to reduce potential release of hydrogen or tritium and deterioration of the fuel rod. The tritium is a gas until absorbed by the "getter" structure, and forms a hydride.

### BACKGROUND OF THE INVENTION

Various parts of nuclear reactors are subjected to attacks such as hydration and/or oxidation by various gases, isotopes or the like generated during operation. In some instances there can be damage to the interior of fuel rods. This can, in rare instances, cause potential deterioration in the fuel rods.

In a typical nuclear reactor, such as a pressurized water (PWR), as shown for example in the Westinghouse Electric Co. brochure, Ready to Meet Tomorrow's Power Generation Requirements Today, 2007, the reactor core includes a large number of fuel assemblies, each of which is composed of a plurality of elongated fuel rods. The fuel rods each contain fissile material such as uranium dioxide (UO₂) or plutonium dioxide (PUO₂), or mixtures, usually in the form of a stack of solid, pressed nuclear fuel pellets. The fuel rods are grouped together in an array which is organized to provide a neutron flux in the core sufficient to support a high rate of nuclear fission and thus the release of a large amount of energy in the form of heat. A coolant, such as water, is pumped, generally from a lower coolant plenum, through the core in order to extract some of the heat generated in the core for the production of useful work. Fuel assemblies vary in size and design depending on the desired size of the core and the size of the reactor.

Nuclear reactors are provided with sufficient excess reactivity at the beginning of a fuel cycle to allow operation for a specified time period, usually between about six to eighteen months. Since a reactor operates only slightly supercritical, the excess reactivity supplied at the beginning of a cycle must be counteracted. Various methods to counteract the initial excess reactivity have been devised, including insertion of control rods in the reactor core and the addition of neutron absorbing elements to, for example, the fuel. Such neutron absorbers, known as "burnable poisons", include, for example, boron, gadolinium, cadmium, samarium, erbium and europium compounds. These burnable poisons absorb the initial excess amount of neutrons while (in the best case) producing no new or additional neutrons or changing into new poisons as a result of neutron absorption.

Sintered pellets of nuclear fuel having an admixture of a boron-containing compound or other burnable poison are known. See, for example, U.S. Patents 3,349,152 and 3,520,958 (Watanabe et al and Versteeg et al, respectively). More recently, in U.S. Patent 7,139,360 B2 (Lahoda), the fuel rods contained a number of fuel pellets, where, more than one half of the rods had at least one fuel pellet of a metal oxide, metal carbide or metal nitride, plus a boron containing burnable poison to contain excess neutrons. Burnable poison coatings were addressed in U.S. Patent 4,587,087 (Radford et al.) where the solid nuclear fuel substrate was coated by a burnable poison layer and enclosed within an end plugged fuel rod.

Addressing protection against oxidation, corrosion and hydration, Rudling et al. in U.S. Patent 6,512,806 B2 taught coating the fuel rod itself, a zirconium alloy, with at least one of zirconium dioxide (ZrO₂) and zirconium nitride (ZrN). Also Davies in the U.S. Patent 5,434,897 utilized fuel rods with a three layer cladding, where the layers facilitated mixing of gases in the cladding interior, so that any steam entry would promote mixing of steam and hydrogen. The fuel rods were sealed at their ends by end plugs with a helical member at the top to prevent axial movement of a pellet column.

Any hydrogen present near the cladding can cause mechanical damage by forming hydrides. If tritium (H³) is present it can form a "dose" problem by passing through the cladding tube and into the coolant water. Once in the coolant, it is difficult to remove/separate since it is chemically and physically near-identical to regular hydrogen, that is, in water molecules. It will follow any reactor water/steam waste stream to the outside. The structure at risk from hydrogen or H³ is the fuel rod cladding if the gas is in the interior of the rod. While H³ is always generated inside the fuel rod, hydrogen can be formed in the fuel rod or introduced and enclosed during manufacture of the fuel rod. Thus, there is a need for a solution to these problems.

It is a main object of this invention to provide an assembly of fuel rods and individual fuel rods which address potential problems of hydrogen and tritium contamination and degradation.

It is also an object of this invention to find absorbers/adsorbers for tritium and hydrogen in a nuclear power plant environment.

### SUMMARY OF THE INVENTION

The above needs are accomplished and objects met by providing a fuel rod having a top and bottom, wherein the fuel rod is made of a cladding material and contains a plurality of nuclear fuel pellets, including a top fuel pellet and a bottom fuel pellet, the fuel rod containing top and bottom end plugs sealing the fuel rod and nuclear fuel pellets; where a separation means, usually a spring, is disposed between the top end plug and the top fuel pellet, and where at least one hollow gas absorber structure is disposed within the fuel rod, said at least one hollow gas absorber structure having an outside surface spaced apart from the interior surface of the fuel rod, and having at least an interior surface coated with a catalyst that absorbs and retains at least one of hydrogen and tritium.

The above needs are also accomplished and objects met by providing a fuel assembly comprising a plurality of fuel rods each having a top and bottom, each fuel rod made of a cladding material and containing within them a plurality of nuclear fuel pellets, including a top fuel pellet and a bottom fuel pellet, the fuel rods containing top and bottom end plugs sealing the plurality of fuel rods and nuclear fuel pellets, where a spring means is disposed between the top end plug and the top fuel pellet, and a hollow gas absorber structure is disposed between the end plug and the fuel pellet, at the opposite end of the fuel rod from the spring means, said hollow gas absorber structure having an outside surface spaced apart from the interior surface of the at least one fuel rods, and having at least an interior surface coated with a catalyst that absorbs and retains at least one of hydrogen and tritium.

Preferably, the gas absorber structure will comprise a ceramic or a temperature resistant metal such as zirconium, and the catalyst coating will be selected from the group consisting of Ni, Pd, Cu, metallic U and mixtures thereof. The fuel assembly and included fuel rod and gas absorber structure will be disposed in a volume generally above an associated bottom reactor cooling plenum.

### BRIEF DESCRIPTION OF THE DRAWINGS

In the course of the following detailed description reference will be made to the attached non-limiting drawings in which:
FIG. 1 is a longitudinal view partly in section and partly in elevation of one embodiment of a prior art PWR nuclear reactor, including a bottom reactor coolant plenum with a plurality of fuel assemblies disposed in a volume above the coolant plenum;
FIG. 2 is a longitudinal view, with parts sectioned and parts broken away for clarity, of one of the prior art nuclear fuel assemblies in the reactor of FIG. 1;
FIG. 3, which best shows the invention, is an enlarged foreshortened longitudinal axial sectioned view of one embodiment of the fuel rods which can be used in the assemblies of FIG. 2, showing a bottom gas absorber structure and top spring means, where the fuel rod can be used in reverse, to place the gas absorber structure on the top; and
FIGS. 4(A) and 4(B) show different non-limiting embodiments of the gas absorber structure, one having five sides and entry/exit gas holes and one having a simple cylindrical structure.

### DESCRIPTION OF THE PREFERRED EMBODIMENTS

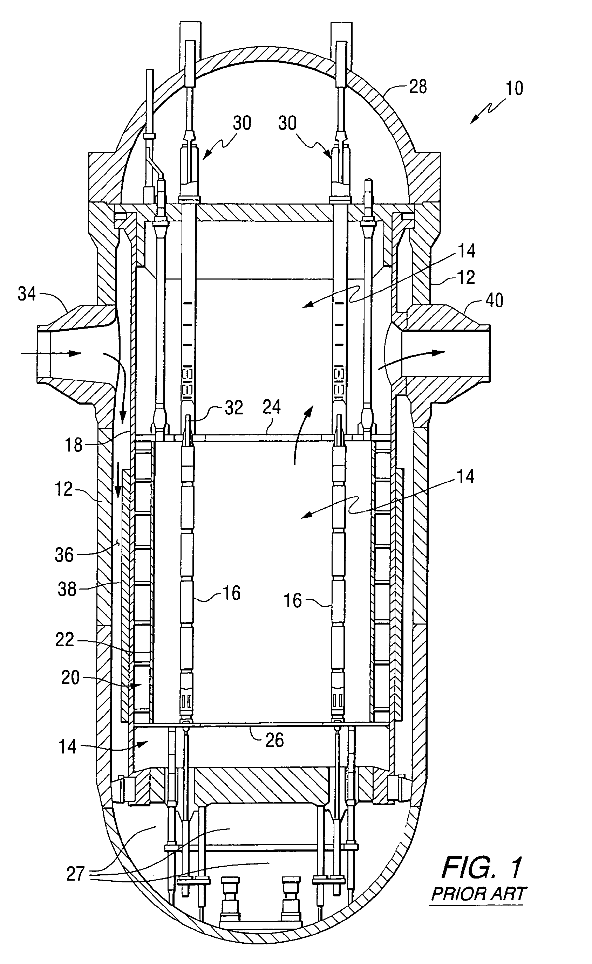

Referring now to the drawings, FIG. 1, shows by way of example only, one of many suitable prior art reactor types, a pressurized water nuclear reactor (PWR), generally designated by the numeral 10. The PWR 10 includes a reactor pressure vessel 12 which houses a nuclear reactor core 14 composed of a plurality of elongated fuel assemblies 16. Relatively few fuel assemblies 16 are shown in FIG. 1 for purposes of simplicity. In reality, the core 14 is composed of a great number of fuel assemblies.

Spaced radially inwardly from the reactor vessel 12 is a generally cylindrical core barrel 18 and within the barrel 18 is a baffle structure 20. The baffle structure 20 surrounds the fuel assemblies 16 of the reactor core 14. Typically, the baffle structure 20 is made of baffle plates 22 joined together by bolts (not shown). The reactor core 14 and the baffle structure 20 are disposed between upper and lower core plates 24, 26 which, in turn, are supported by the core barrel 18.

The upper end of the reactor pressure vessel 12 is hermetically sealed by a removable closure head 28 upon which are mounted a plurality of control rod drive mechanisms 30. Again, for simplicity, only a few of the many control rod drive mechanisms 30 are shown. Each drive mechanism 30 selectively positions a rod cluster control assembly mechanism 32 above and within some of the fuel assemblies 16.

A nuclear fission process carried out in the fuel assemblies 16 of the reactor core 14 produces heat which is removed during operation of the PWR by circulating a coolant fluid, such as light water with soluble boron, through the core 14. More specifically, the coolant fluid is typically pumped into the reactor pressure vessel 12 through a plurality of coolant inlet nozzles 34 (only one of which is shown in FIG. 1).

The coolant fluid enters the reactor vessel through coolant inlet nozzles 34, and passes downward through an annular region 36 defined between the reactor vessel 12 and core barrel 18 (and a thermal shield 38 on the core barrel) until it reaches the bottom reactor cooling plenum 27 of the reactor vessel 12 where the coolant turns 180 degrees prior to following up through the lower core plate 26 and then up through the reactor core 14. On flowing upwardly through the fuel assemblies 16 of the reactor core 14. The coolant then passes through the upper core plate 24 and exits the reactor vessel through outlet nozzles 40.

The coolant fluid is heated to reactor operating temperatures by the transfer of heat energy from the fuel assemblies 16 to the fluid. The hot coolant fluid then exits the reactor vessel 12 through a plurality of outlet nozzles 40 (only one being shown in FIG. 1) extending through the core barrel 18. Thus, heat energy which the fuel assemblies 16 impart to the coolant fluid is carried off by the fluid from the pressure vessel 12.

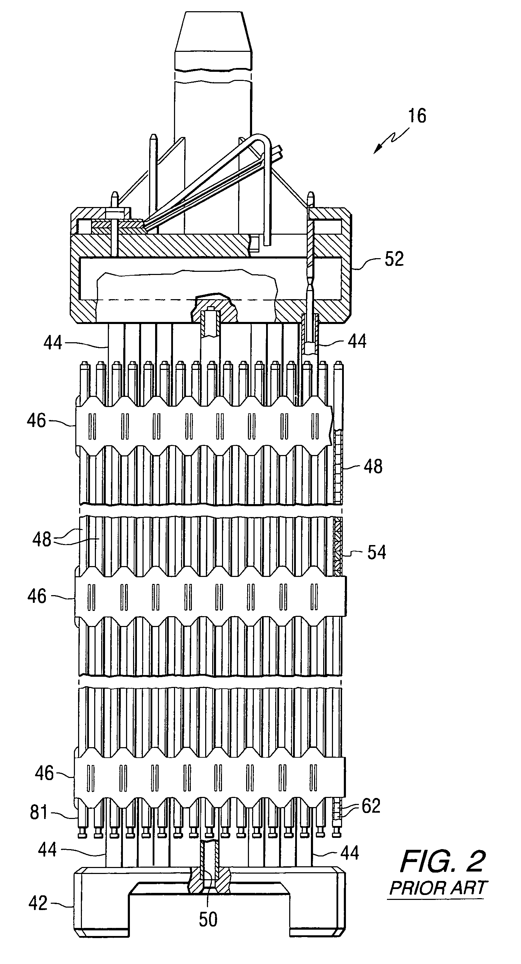

As briefly mentioned above, the reactor core 14 is composed of a large number of elongated fuel assemblies 16. Turning to FIG. 2, each fuel assembly 16, being of the type used in a PWR, basically includes a lower end structure or bottom nozzle 42 which supports the assembly on the lower core plate 26 (shown in FIG. 1) and a number of longitudinally extending guide tubes or thimbles 44 which project upwardly from the bottom nozzle 42. The assembly 16 further includes a plurality of transverse support grids 46 axially spaced along the lengths of the guide thimbles 44 and attached thereto. The grids 46 transversely space and support a plurality of fuel rods 48 in an organized array thereof. Also, the assembly 16 has an instrumentation tube 50 located in the center thereof and an upper end structure or top nozzle 52 attached to the upper ends of the guide thimbles 44. With such an arrangement of parts, the fuel assembly 16 forms a integral unit capable of being conveniently handled without damaging the assembly parts.

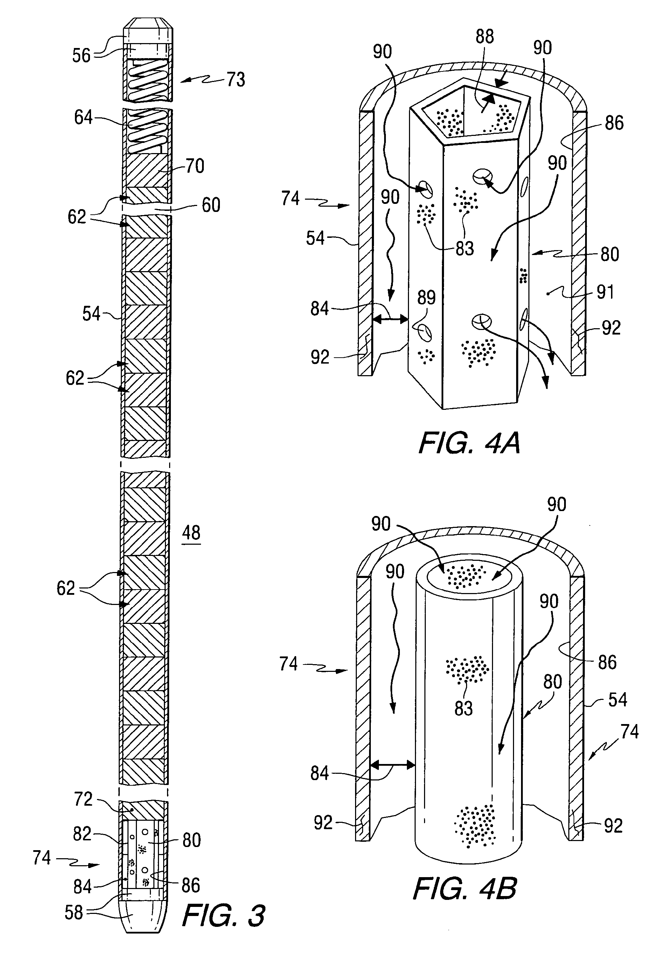

As seen in FIG. 3, each of the fuel rods 48 of the fuel assembly 16 (shown in FIG. 2) has generally identical construction insofar as each includes an elongated hollow cladding tube 54 with a top end plug 56 and a bottom end plug 58 attached to and sealing opposite ends of the tube 54 defining a sealed chamber shown generally as 60 therein. A plurality of nuclear fuel pellets 62, usually in solid round flat puck form, are usually placed in an end-to-end abutting arrangement or stack within the chamber 60 and held in place by the action of a spring or like device/means 64 placed in the chamber 60 usually between the top pellet 70 and the top end plug 56. A bottom pellet 72 is shown near the bottom 74 of the fuel rod 48. Referring back to FIG 2 prior art structure, the new interior absorber structure will be at location generally shown as 81.

As can be seen in FIG. 3, top end plug 56 is shown at the top 73 of the fuel rod and bottom end plug 58 is shown at the bottom 74 of the fuel rod, where a hollow gas absorber structure 80 can be disposed between the bottom end plug 58 and the bottom fuel pellet 72. The outside surface 82 of the gas absorber structure 80 is spaced apart a distance 84 from the interior surface 86 of the fuel rod 48, cladding tube 54. The hollow gas absorber structure will contain, be impregnated with, or coated with a catalytic material, shown ideally as dots 83 in FIGS 4A-4B, effective to "get"/absorb hydrogen and tritium. Of course the catalyst would cover all the surfaces - not shown for simplicity. The inside structure 80 is kept hollow but may also contain catalyst on the inside surface.

Hydrogen is generated in the fuel rod interior gas primarily by reactions of retained moisture in the rod with the zirconium alloy inner cladding tube 54 surface:

2H₂O + Zr = 2H₂ + ZrO₂

Another potential source of hydrogen is internal anomalous hydrogenous-material contamination. Potential tritium sources are neutron absorption reactions with Boron and ternary fission reactions in the nuclear fuel. Tritium is a gas prior to being absorbed by the getter structure where it forms a hydride. If it escapes the fuel rod the tritium can exist as a gas in solution, or due to radiolysis can become tied in a water molecule as titrated water.

The hollow gas absorber structure 80 will preferably comprise zirconium, preferably a zirconium alloy but could also be any metal or metal alloy resistant to temperatures over about 300°C, or a high temperature ceramic, such as one comprising silicon. The catalyst "getter"/absorber is selected from a catalytic material that allows hydrogen and tritium to react with the gas absorber structure, preferably, it is selected from the group consisting of Ni, Pd, Cu, metallic U and mixtures thereof. The distance 84 from the outside surface 82 of the gas absorber structure and the interior surface 86 of the fuel rod, for good gas flow contact with the catalyst will range from about to 0.25 cm to 0.08 cm). The wall thickness 88 (shown in FIG. 3(A)) of the gas absorber structure will range from about 0.3 cm to 0.6 cm.

The porosity of the gas absorber structure to assure good gas contact with the catalyst and access to the interior of the structure will preferably be at least about 99 vol. % dense or even higher. This will provide sufficient strength to resist the weight of the fuel pellets.

Several embodiments of the gas absorber structure 80 are shown, as illustrations only and not meant to be limiting, in FIG. 4(A) and FIG. 4(B). These structures 80 can be of various shapes to provide optional surface area, such, for example, as the pentagon shaped structure of FIG. 4(A), or they can be the easy to manufacture tubular structure of FIG. 4(B). They can have small openings 89 of various shapes in/through its sides therethrough, penetrating the sides to allow gas 90, shown as arrows, to enter the interior volume which may be of larger volume than the annular volume 91 around the structures. In other instances of higher porosity structures the gas 90 may be allowed to permeate/diffuse through the sides of the structure to the interior.

The internal hydrogen/tritium "getter" structure 80 is designed to absorb and retain gases 90 such as hydrogen gas and tritium isotope gas to prevent for example any potential fine cracks or fissures, shown as 92, at the bottom wall 74 of the cladding tube 54. Preferably, the catalyst will also be inside the structure 80, to avoid possible contaminating material in contact with the interior cladding and because of less restricted communication with the gases 90. However, in some instances it may be desirable to have the catalytic material on the exterior or on both the interior and exterior surfaces of the structure 80.

As an Example: Starting with a small hollow "getter" tube of Zircaloy 4 or ZIRLO, with a porosity of less than about 0.01 vol. porous %, (99 vol. % dense), a coating is applied to the tube surface (both ID and OD) that will act as a catalyst to enhance the absorption of hydrogen gas into the "getter" tube. The hydrogen contacted was found to diffuse into the solid metal matrix and chemically react with the zirconium in the tube to form zirconium hydride that precipitates as a solid phase within the metal matrix of the "getter" tube. Effectively, the hydrogen gas is converted to and is retained as a solid phase. It is not a gas phase retention mechanism. The ends of the tube are open and provide a flow path for the rod internal gas to flow into the tube ID. The seating contact with an end plug and fuel pellets is not sufficient to preclude gas flow, but in some designs there can be slots or holes that provide less hindered ingress with the same expected result.

Whereas particular embodiments of this invention have been described above for purposes of illustration, it will be evident to those skilled in the art that numerous variations of the details of the present invention may be made without departing from the invention as defined in the appended claims.

## Claims

1. A fuel rod having a top and bottom, wherein the fuel rod is made of a cladding material and contains a plurality of nuclear fuel pellets, including a top fuel pellet and a bottom fuel pellet, the fuel rod containing top and bottom end plugs sealing the fuel rod and nuclear fuel pellets; where a separation means is disposed between the top end plug and the top fuel pellet, and where at least one hollow gas absorber structure is disposed within the fuel rod, said at least one hollow gas absorber structure having an outside surface spaced apart from the interior surface of the fuel rod, and the gas absorber structure having at least an interior surface coated with a catalyst that absorbs and retains at least one of hydrogen and tritium.

2. The fuel rod of claim 1, wherein the gas absorber structure comprises zirconium, and the separation means is a spring.

3. The fuel rod of claim 1, wherein the gas absorber is a zirconium alloy or a ceramic.

4. The fuel rod of claim 1, wherein said the interior surface of the gas absorber structure is coated with a catalyst selected from the group consisting of Ni, Pd, Cu, metallic U and mixtures thereof.

5. The fuel rod of claim 1, wherein said the exterior surface of the gas absorber structure is coated with a catalyst selected from the group consisting of Ni, Pd, Cu, metallic U and mixtures thereof.

6. A fuel rod assembly comprising a plurality of fuel rods, each having a top and bottom, each fuel rod made of a cladding material and containing within them a plurality 10 of nuclear fuel pellets, including a top fuel pellet and a bottom fuel pellet, the fuel rods containing top and bottom end plugs sealing the plurality of fuel rods and nuclear fuel pellets, where a spring means is disposed between the top end plug and the top fuel pellet, and a hollow gas absorber structure is disposed between the end plug and the fuel pellet, at the opposite end of the fuel rod from the spring means, said hollow gas absorber structure having an outside surface spaced apart from the interior surface of the at least one fuel rod, and the gas absorber structure having at least an interior surface coated with a catalyst that absorbs and retains at least one of hydrogen and tritium.

7. The fuel rod assembly of claim 6, wherein the gas absorber structure comprises zirconium.

8. The fuel rod assembly of claim 6, wherein the gas absorber is a zirconium alloy or a ceramic.

9. The fuel rod assembly of claim 6, wherein said the interior surface of the gas absorber structure is coated with a catalyst selected from the group consisting of Ni, Pd, Cu, metallic U and mixtures thereof.

10. The fuel rod assembly of claim 6, wherein said the exterior surface of the gas absorber structure is coated with a catalyst selected from the group consisting of Ni, Pd, Cu, metallic U and mixtures thereof.

11. The fuel rod assembly of claim 6, wherein both the interior and exterior surfaces of the gas absorber structure are coated with a catalyst selected from the group consisting of Ni, Pd, Cu, metallic U and mixtures thereof.

12. The fuel rod assembly of claim 6, wherein the gas absorber structure will have a wall thickness from about 0.3 cm to 0.6 cm and have a density of at least about 99% vol.%.

13. The fuel rod assembly of claim 6, wherein the gas absorber structure is tubular.

14. The fuel rod assembly of claim 6, wherein the gas absorber structure will have openings through its sides.
